# EUROPEAN PATENT SPECIFICATION

(11) **EP 3 162 598 B1**
(45) Date of publication and mention of the grant of the patent: **04.12.2019**
(21) Application number: 15191577.4
(22) Date of filing: 27.10.2015
(51) Int. Cl.: B60H 1/00

(54) **STATION FOR RECOVERING AND RECHARGING REFRIGERANT FLUID FROM AN AIR CONDITIONING SYSTEM OF A MOTOR VEHICLE WITH INCONDENSABLE GAS DETERMINATION SYSTEM, AND CORRESPONDING METHOD**
STATION ZUR RÜCKGEWINNUNG- UND AUFLADUNG EINES KÄLTEMITTELS EINER KRAFTFAHRZEUGKLIMAANLAGE MIT ERKENNUNG VON NICHTKONDENSIERBAREM GAS, UND VERFAHREN DAFÜR
STATION DE RÉCUPÉRATION ET DE RECHARGE DE FLUIDE RÉFRIGÉRANT DE CLIMATISATION DE VÉHICULES À MOTEUR À SYSTÈME DE DÉTECTION DE GAZ NON CONDENSABLE, ET PROCÉDÉ ASSOCIÉ

(43) Date of publication of application: 03.05.2017
(73) Proprietor: Mahle Aftermarket Italy S.p.A., 43126 Parma (IT)
(72) Inventor: CANTADORI, Andrea, 43126 Parma (IT)
(74) Representative: Dondi, Silvia

(56) References cited:
- EP-A1- 2 529 961
- EP-A2- 2 591 929
- US-A- 5 005 369
- US-A- 6 134 899

## Description

### SCOPE OF THE INVENTION

The present invention relates to automotive air conditioning stations, also called A/C stations, particularly for use in repair shops, refrigerant recovery and recharging stations for air conditioning in motor vehicles.

### BACKGROUND ART

Air conditioning systems in motor vehicles are subject to refrigerant leakage and require periodic refills. It is therefore necessary to carry out a system recharge and/or regeneration; to this end, devices have been developed for maintenance of air conditioning systems able to carry out the recovery, recycling and recharging of the refrigerant inside the system itself.

A method and apparatus for checking the presence of incondensable gases in an air conditioning charging station is known from EP 2 591 929 A2.

In the charging techniques of air conditioning systems for motor vehicles, the control of the so-called "incondensable" gases, i.e. gases which cannot be liquefied at ordinary temperature and pressure, takes on considerable importance. In practice this is air whose presence, in solution (in liquid or vapor phase) with the refrigerant gases (R-134a and R-1234yf are those currently universally used by the industry) causes some drawbacks described below.

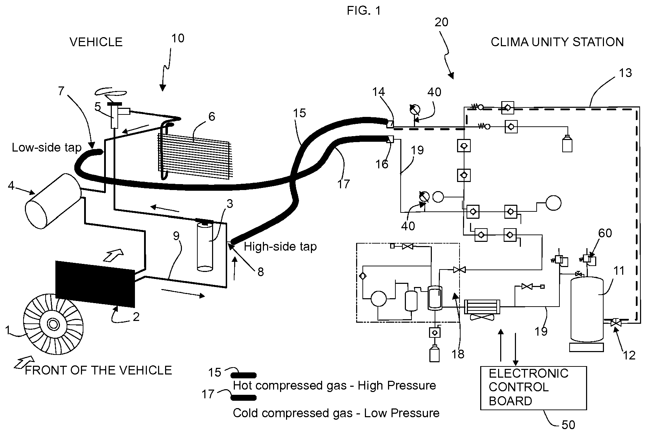

As seen in figure 1, the presence of incondensable gases increases the liquid-vapor equilibrium pressure of the refrigerant: in fact, this pressure in the pure refrigerant is equal to the vapor pressure of the refrigerant itself and increases with increasing concentration of incondensable gas according to Dalton's law. The pressure rise in the A/C system in operation translates into a reduction of the coefficient of performance COP of the compressor, i.e. a reduction of yield and thus a higher fuel consumption: intuitively, this is because air participates very marginally in the refrigerating cycle, as it does not change state during a cycle of an A/C system for automotive use, and because the compressor must compress the refrigerant-air mixture at higher pressures than it would with pure refrigerant.

The amounts of air are still very limited: on average, they are parts per million (ppm), since the air enters just as undesired component through repeated connection/disconnection cycles of the service fittings of the A/C system. In fact, every A/C system for automotive use is provided with two connectors, as will apparent from the following description, called service ports: one for the high pressure (HP) side and one for the low pressure (LP) side. Such ports, and the corresponding fittings supplied to the recharging stations, are regulated by the SAE J639 standard.

During normal use, a dead space remains for each fitting of the quick coupling on the corresponding port in which the ambient air is trapped and then recovered by the station through the refrigerant. Typically, there are 2 cubic centimeters of air (about 2 milligrams) for systems with a capacity of about 500 grams, i.e. 4 ppm. This amount of air remains mostly dissolved in the vapor phase of the storage cylinder of the charging station; since the A/C system charging takes place by taking refrigerant from the liquid phase in the storage tank, also called storage cylinder, most of the air is not returned to the system. A progressive accumulation of air thus occurs, to the point that a significant fraction may also be present in the liquid phase, thus "polluting" the A/C system.

In addition to the above, it should also be noted that one or more incorrect operations by the operator of the charging system may cause an accidental suction of ambient air by the station.

For this reason, the SAE J2099 standard details some requirements of purity of the refrigerant used for charging: the charging stations must ensure that the gas used for charging contains not more than 150 ppm air by weight.

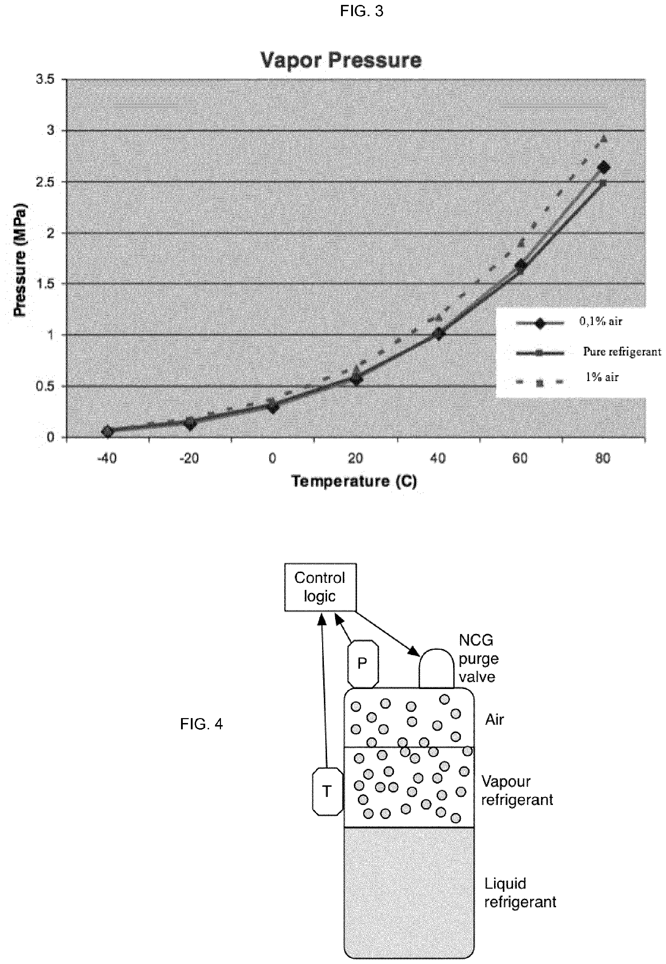

The prior art used to monitor the presence of incondensable gases involves the measurement of temperature T and pressure P of the storage cylinder inside the climate station. When the station is inactive (but obviously switched on, so that the control electronics can implement the algorithm described hereinafter), the software checks that the coordinate pair (P, T) is on the liquid-vapor equilibrium line of the pure refrigerant (shown in figure 3). If the measured pressure is higher than what it should be at temperature T, there are incondensable gases and through a special valve on top of the tank, the same is "purged", i.e. a vapor phase that (at least in theory) consists primarily of air (a stratification occurs, since air is lighter than the refrigerant vapor, as shown in figure 5) is vented.

Said technique has the main drawback of requiring a dedicated pressure sensor on the tank, which is generally expensive and, more importantly, is used only during "maintenance" operations of the refrigerant: typically, the need for air bleeding occurs once every two weeks, rarely more often.

### DESCRIPTION AND ADVANTAGES OF THE INVENTION

The object of the present invention is to provide an improved climate station, i.e. that equally allows the presence of any incondensable gas inside the tank to be determined and possibly proceed to the bleeding thereof, with a simple, rational and quite cost-effective solution.

These and other objects are achieved with the features of the invention described in the independent claim 1. The dependent claims describe preferred and/or particularly advantageous aspects of the invention.

In particular, an embodiment of the present invention provides that the climate station does not have a dedicated cylinder/tank pressure sensor, and that at least one of the one or more sensors (such as LP) already present in the charging station is used through the onboard electronics, i.e. the dedicated sensors for monitoring the operations in the A/C system of the vehicle arranged on the low and high pressure (LP, HP) lines of the A/C station.

In particular, an embodiment of the present invention provides that in the station thus configured, when the control electronics is required to proceed with checking the incondensable gases, said electronics is configured to control the opening of the refrigerant valve and an HP/LP separation valve, which is a normally closed valve which keeps the high and low pressure lines separate.

In this way, the refrigerant in liquid phase reaches the service pipes and comes into contact with the low pressure sensor, i.e. the service sensor of the station provided to monitor the progress of the refrigerant recovery and charging operations.

At this point, the electronics picks up and takes into account the temperature T signal received from the tank and said pressure P of the low or high pressure line, and checks that the pair of coordinates (P, T) is on the liquid-vapor equilibrium line of the pure refrigerant (shown in figure 3). If not, i.e. if the measured pressure is higher than what it should be at temperature T, it means that there are incondensable gases: through a special valve on top of the tank, the same is "purged", i.e. a vapor phase that consists primarily of air (a stratification occurs, since air is lighter than the refrigerant vapor) is vented.

If the incondensable gases need to be discharged, the control electronics proceeds with bleeding by operating the solenoid valve connected to the station tank until the pair (P, T) returns on the pressure-temperature curve of the pure refrigerant.

At the end of the above check and relative operations, the refrigerant filling valve is closed and the gas present in the pipes is recovered and introduced back in the tank.

By this solution, the advantage obtained was maintaining the incondensable gas venting feature at a significantly lower cost, since no dedicated pressure sensor for the tank is used.

In contrast, the flooding and subsequent emptying of the pipes typically requires a penalty of 1-2 minutes, absolutely negligible considering that the draining of incondensable gases is typically required not more often than every two weeks.

Said objects and advantages are all achieved by the climate station for charging and recovery systems of motor vehicles with incondensable gas control system and method thereof, object of the present invention, characterized by that provided in the following claims.

### BRIEF DESCRIPTION OF THE FIGURES

This and other features will be more apparent from the following description of some of the embodiments, illustrated purely by way of example in the accompanying drawings.
- Figure 1: generically shows a circuit diagram for connecting a charging station to the air conditioning system of a motor vehicle,
- Figure 2: shows in detail the circuit diagram of an A/C charging station for motor vehicles, comprising a system configured to carry out the oil recovery as provided by the invention,

- Figure 3: shows the pressure-temperature chart of the pure refrigerant,
- Figure 4: shows the stratification inside the tank of the climate station.

### DESCRIPTION OF THE INVENTION

The present invention will now be described in detail with reference to the accompanying drawings to enable a man skilled in the art to implement and use it. Various modifications to the embodiments described will be immediately apparent to the man skilled in the art.

With reference to figure 1, reference numeral 10 indicates an air conditioning or climate control system in a motor vehicle; it is installed in a vehicle and comprises a refrigeration circuit within which a refrigerant gas of predetermined type circulates at low pressure.

The main components in said system 10 are:
- a compressor 4;
- a condenser 2 and a ventilation system 1;
- at least one refrigerant storage and dryer filter 3,
- an expansion valve 5;
- an evaporator 6.

The compressor is the component designed to generate the pressure difference, a difference that allows the cycle to be repeated: in fact, it pumps the refrigerant fluid through the evaporator, where it evaporates at low pressure by absorbing heat from the outside, then compresses it and pushes it inside the condenser, where it condenses at high pressure by releasing the previously absorbed heat to the outside. The refrigerant fluid changes state inside the two heat exchangers: in the evaporator it changes from liquid to gaseous, in the condenser it changes from gaseous to liquid.

The motor vehicle air conditioning system 10 also has two external terminals/connectors 7, 8 in low pressure (external low pressure connector) and high pressure (external high pressure connector), respectively, through which it is possible to recharge and/or recover the refrigerant gas through the connection with corresponding coupling devices of the climate station, or A/C station, in order to carry out the maintenance and recharge operations and other necessary checks.

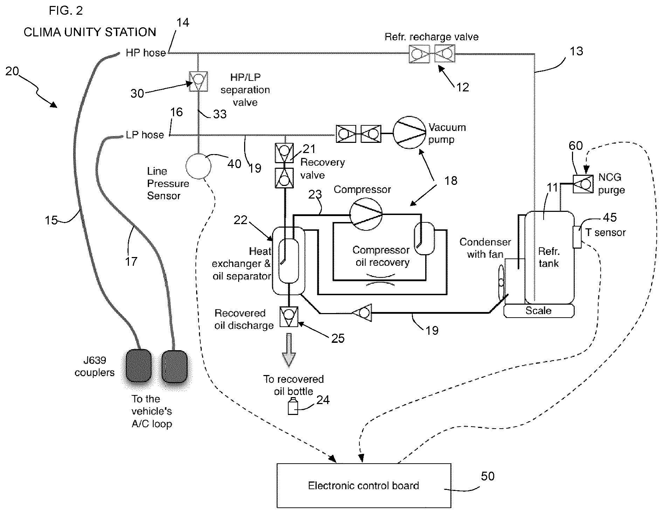

Again with reference to figure 1 and now also to figure 2, reference numeral 20 indicates a climate recovery and charging station comprising at least the following components:
- a refrigerant tank 11, or cylinder,
- a shut-off solenoid valve 12 for opening and closing at least one refrigerant fluid outlet pipe 13,
- HP, i.e. high pressure, connection, indicated with reference numeral 14, connectable in the respective high pressure branch 15 to the conditioning system 10, so as to be connected to the high pressure liquid refrigerant through the fitting/valve 8;
- an LP, i.e. low pressure, connection is also provided, which is identified by reference numeral 16, and connectable through the corresponding branch 17 to the conditioning system, in the fitting indicated with reference numeral 7 generally placed after the expansion valve; the refrigerant is in a gaseous state and at low pressure;
- a suction unit 18 that, through a compressor element, sucks/extracts the refrigerant from the conditioning system of the vehicle and sends it to tank 11 through pipes 19, so as to drain the system,
- a separation valve 30 of high and low pressure lines,
- a pressure sensor 40 on at least one of said high and low pressure lines,
- a temperature sensor 45 integral with, or alternatively mounted in the proximity of, said tank (11) for measuring said parameter,
- a solenoid valve 60 for draining the incondensable gas from the tank,
- at least one control and data processing unit/card 50 configured with said elements so as to receive the values thereof and manage the recovery, recharge steps and the operations required to implement the present invention.

Substantially, once connected to the air conditioning system, the climate station carries out the following operations:
- The recovery of the refrigerant fluid present in the conditioning system, through the pipes for connection to the system of vehicle 15 and 17 and the respective valves 7 and 8;
- The filtering of the refrigerant fluid recovered;
- The injection of refrigerant fluid in the air conditioning system, on the high pressure HP valve side.

Systems of the measurement of the mass associated with the tank may be provided, so as to monitor both the amount of refrigerant fluid recirculated and the amount subsequently injected in the air conditioning system.

Further devices or features may be implemented in the control logic and the configuration of the processing and management unit of station 20, without departing from the scope of the present invention which, as said, relates to a procedure configurable in the control unit of station 20 capable to implement and allow full recovery of the oil at the end of the refrigerant recovery for its subsequent re-introduction during charging of system 10.

The climate station 20 of the present invention, contrary to the stations of the prior art, is not provided with any pressure sensor connected to tank 11.

The presence of valve 30 along with the operating logic of the control unit of station 20 allows determining the presence of incondensable gases inside the cylinder and possibly purging them, with a saving in terms of costs of the station while maintaining adequate reliability.

The control unit 50 is in fact configured to operate without a dedicated pressure sensor on tank 11, which as said would be used only upon switch-on in order to assess the presence of incondensable gases in said tank.

The control unit 50 instead uses one of the sensors (such as LP) already present in the charging station for monitoring the operations in the A/C system of the vehicle (it is in fact necessary to have one or two sensors on the LP and HP lines of the station in order to carry out a recovery cycle, since without the information relating to pressure in the system it is not possible to know when the recovery has finished).

The method implemented by the control logic and configured in unit 50 is schematically shown with particular reference to figure 3, which shows the diagram of a typical low cost service station, i.e. provided with only one pressure sensor 40 on the LP line indicated with reference numeral 19.

In essence, when the electronic control unit 50 wants to proceed to the verification of the incondensable gases - generally when switching on station 20 or at preconfigured time intervals on the same control unit, unit 50 opens the refrigerant charging valve 12 and valve 30 of separation of lines 19 and 13 (HP/LP), and makes the pure refrigerant flow from tank 11 and in liquid phase to the service pipes now configured as a closed circuit (indicated with reference numerals 19, 13 and 33); in this way, the fluid comes into contact with the low pressure sensor LP, that is, the sensor indicated with reference numeral 40 and serving the station, provided to monitor the progress of the refrigerant recovery and recharging operations.

At this point, unit 50:
- Considering the temperature value T arriving from a dedicated temperature sensor 45 connected to tank 11 and
- Considering the pressure value measured by sensor 40 when the circuit is closed by valve 30 and line 33,
- Checks that the pair of pressure-temperature coordinates (P in 40, T 45) corresponds to that of the liquid-vapor equilibrium line of the pure refrigerant, an example of which is shown in figure 3.

If such a coordinate pair does not correspond to that of the pure refrigerant line, that is, if the pressure measured by sensor 40 is greater than what it should be at temperature T, it means that there are incondensable gases and through the appropriate valve 60 on top of tank 11, they are "purged", allowing an outflow of vapor phase which is mostly made up of air - in fact, since air is lighter than the refrigerant vapor, stratification occurs as shown in figure 4.

The opening of said valve 60 continues until the pressure-temperature pair (P in 40, T in 45) returns on the pressure-temperature curve of the pure refrigerant.

At the end of the operations, the refrigerant charging valve 12 is closed and the gas present in lines 33, 19, 13 is recovered and then fed back into tank 11.

At this point, the station is free of incondensable gases and the maintenance operations of the air conditioning system of the motor vehicle can be carried out.

In this way, the advantage obtained was maintaining the incondensable gas venting feature at a significantly lower cost, since no dedicated pressure sensor for the cylinder is used. In contrast, the flooding and subsequent emptying of the pipes typically requires a penalty of 1-2 minutes, absolutely negligible considering that the draining of incondensable gases, as mentioned, is typically required not more often than every two weeks.

In essence, the method for the verification of the presence of incondensable gases in a climate charging station 2 determines the presence of incondensable gases inside tank 11 of station 20 using one of the LP or HP sensors present in the charging station 20 and adapted to monitor the recovery and recharge of the A/C system of the vehicle; the control unit 50 opens at least one refrigerant charging valve and at least one valve of separation of the HP/LP lines, forming a closed circuit so that the refrigerant in the liquid phase and from tank 11 floods the service pipes 13, 19, 33 and comes into contact with the service pressure sensor 40 of station 20 which, connected to said unit 50, communicates the corresponding value thereof; as a function of said pressure and temperature value measured on tank 11, the unit processes and verifies the presence of incondensable gases.

## Claims

1. Method for checking the presence of incondensable gases in an air conditioning recharging station (20), **characterized in that** it provides for the determination of the presence of incondensable gases inside the tank (11) of the station (20) by using one of the sensors (LP, HP) present in the charging station (20) and adapted to monitor the recovery and recharging operations of the air conditioning system of a motor vehicle; a control unit (50) of the station (20) is configured to open at least one refrigerant charging valve (12) and at least one separation valve (30) of high pressure (HP) and low pressure (LP) lines (19, 13) of the station (20) so as to form a closed circuit (19, 13, 33);
once the circuit has been formed, the pure refrigerant in liquid phase flows from tank (11) to the circuit, coming into contact with at least one pressure sensor (40) placed on the high or low pressure lines of the station (20) and normally used to monitor the progress of the refrigerant recovery and charging operations; the refrigerant pressure value is measured by said sensor (40) and the unit (50) checks the presence of incondensable gases, using said value for comparison with a liquid-vapor equilibrium line of the pure refrigerant contained in the tank (11).

2. Station (20) for recovering and recharging refrigerant fluid from an air conditioning system (10) of motor vehicles, with control unit (50) configured to operate according to the method set out in claim 1.

## Patentansprüche

1. Verfahren zur Überprüfung des Vorhandenseins von nichtkondensierbaren Gasen in einer Klimaanlagen-Aufladestation (20), **dadurch gekennzeichnet, dass** es die Erkennung des Vorhandenseins von nichtkondensierbaren Gasen innerhalb des Tanks (11) der Station (20) unter Verwendung eines der in der Aufladestation (20) vorhandenen Sensoren (LP, HP) vorsieht und zur Überwachung der Rückgewinnungs- und Aufladevorgänge der Klimaanlage eines Kraftfahrzeugs ausgelegt ist; eine Steuereinheit (50) der Station (20) zum Öffnen mindestens eines Kältemittelladeventils (12) und mindestens eines Trennventils (30) von Hochdruck- (HP) und Niederdruck- (LP) -Leitungen (19, 13) der Station (20) ausgelegt ist, um einen geschlossenen Kreislauf (19, 13, 33) zu bilden;
sobald der Kreislauf gebildet worden ist, fließt das reine Kältemittel in flüssiger Phase vom Tank (11) zum Kreislauf und kommt mit mindestens einem Drucksensor (40) in Kontakt, der auf den Hochdruck- oder Niederdruckleitungen der Station (20) platziert ist und der normalerweise zur Überwachung des Fortschritts der Rückgewinnung- und Aufladevorgänge des Kältemittels verwendet wird; der Kältemitteldruckwert wird vom Sensor (40) gemessen und die Einheit (50) prüft das Vorhandensein von nichtkondensierbaren Gasen, wobei der Wert zum Vergleich mit einer Flüssigkeits-Dampf-Gleichgewichtsleitung des im Tank (11) enthaltenen reinen Kältemittels verwendet wird.

2. Station (20) zur Rückgewinnung und Aufladung von Kältemittel aus einer Klimaanlage (10) von Kraftfahrzeugen mit einer Steuereinheit (50), die zum Betrieb nach dem in Anspruch 1 angegebenen Verfahren ausgelegt ist.

## Revendications

1. Procédé destiné à contrôler la présence de gaz non condensables dans une station de recharge (20) de climatisation, **caractérisé en ce qu'**il prévoit la détection de la présence de gaz non condensables à l'intérieur du réservoir (11) de la station (20) en utilisant un des capteurs (LP, HP) présents dans la station de charge (20) et adapté pour contrôler les opérations de récupération et de recharge du système de climatisation d'un véhicule à moteur ; une unité de commande (50) de la station (20) est configurée pour ouvrir au moins un robinet de charge (12) de réfrigérant et au moins une vanne de séparation (30) de lignes (19, 13) haute pression (HP) et basse pression (LP) de la station (20) de sorte à former un circuit fermé (19, 13, 33) ;
après formation du circuit, le réfrigérant pur en phase liquide s'écoule du réservoir (11) vers le circuit, en venant en contact avec au moins un capteur de pression (40) placé sur les lignes haute ou basse pression de la station (20) et normalement utilisé pour contrôler le progrès des opérations de récupération et de charge de réfrigérant ; la valeur de pression du réfrigérant est mesurée par ledit capteur (40) et l'unité (50) vérifie la présence de gaz non condensables en utilisant ladite valeur pour la comparer à une ligne d'équilibre liquide-vapeur du réfrigérant pur contenu dans le réservoir (11).

2. Station (20) de récupération et de recharge de fluide réfrigérant, d'un système de climatisation (10) de véhicules à moteur, dotée d'une unité de commande (50) configurée pour fonctionner selon le procédé présenté dans la revendication 1.
